# EUROPÄISCHE PATENTSCHRIFT

(11) **EP 0 434 949 B1**
(45) Veröffentlichungstag und Bekanntmachung des Hinweises auf die Patenterteilung: **08.06.1994**
(21) Anmeldenummer: 90121569.9
(22) Anmeldetag: 10.11.1990
(51) Int. Cl.: G08B 13/16

(54) **Raumüberwachungsanlage**
Room monitoring system
Système de surveillance de locaux

(30) Priorität: 18.11.1989 DE 3938428
(43) Veröffentlichungstag der Anmeldung: 03.07.1991
(73) Patentinhaber: ALCATEL N.V., NL-1077 XX Amsterdam (NL)
(72) Erfinder: Szechenyi, Kàlmàn, W-7151 Spiegelberg (DE)
(74) Vertreter: Pohl, Herbert, Dipl.-Ing.

(56) Entgegenhaltungen:
- DE-A- 3 432 292
- FREQUENZ, Band 38, Nr. 6, 1984, Seiten 142-148; T. BECKER et al.: "Probleme bei der Kompensation akustischer Echos"

## Beschreibung

Die Erfindung betrifft eine Alarmanlage zur Erfassung unbefugten Betretens oder Veränderns von Räumen oder dergleichen.

Alarmanlagen können nach unterschiedlichen Funktionsprinzipien arbeiten. So ist es bekannt, elektrische Kontakte derart anzuordnen, daß sie beim Eindringen in einen gesicherten Raum zwangsläufig betätigt werden, was zur Auslösung eines Alarms führt. Ferner sind Alarmanlagen bekannt, die mit Infrarot- oder Ultraschall-Strahlung arbeiten. Anlagen mit Ultraschall-Strahlung reagieren beim Auftreten des Dopplereffekts, das heißt, sich im Überwachungsraum bewegende Objekte führen zu Frequenzverschiebungen, die die Anlage erfaßt und den Alarm auslösen.

Ein bekanntes Ultraschall-Alarmsystem enthält als Schallerzeuger einen elektroakustischen Wandler, sowie einen Ultraschall-Empfänger, in des das aufgenommene Empfangssignal vorverstärkt, einer selektiven Empfangsverstärkerstufe zugeführt und über eine Hüllkurvenmodulator und einen A/D-Wandler zur Auswertung in eine mikrocomputergesteuerten Einheit gelangt (DE 34 32 292 A1).

In der Fachzeitschrift "Frequenz", 38 (1984) 6, Seiten 142 bis 147, werden "Probleme bei der Kompensation akustischer Echos" behandelt. Ziel ist es, bei Freisprecheinrichtungen unerwünschte Rückkopplungen des Lautsprechers auf das Mikrofon zu reduzieren. Es kommt ein sogenannter Echokompensator zum Einsatz, der Schallreflexionen an den Wänden, der Decke und dem Boden eines Raumes kompensiert, so daß die Rückkopplungsneigung eines derartigen Lautsprecher-Raum-Mikrofon-Systems (LRM-Systems) reduziert wird. Eine wirksame Echokompensation wird in kleinen Räumen nur mit adaptiven Kompensatoren erzielt, die in der Lage sind, Veränderungen in dem Raum -z. B. durch Hineinstellen eines Stuhls- ausreichend schnell -möglichst in "Echtzeit"- zu folgen. Der Echokompensator der Freisprecheinrichtung stellt sich somit auf die veränderten Verhältnisse ein.

Demgegenüber liegt der Erfindung ein ganz anderes Problem zugrunde, da sie sich nicht auf Freisprechanlagen sondern auf Alarmanlagen zur Einbruchsicherung bezieht. Die eingangs genannten, bekannten Alarmanlagen verlangen beim Einsatz von Kontakten bautechnische Maßnahmen, so daß ein relativ großer Aufwand betrieben werden muß. Alarmanlagen in Ultraschalltechnik sind sehr empfindlich in bezug auf Fehlalarme, da bereits starke Luftbewegungen zur Auslösung führen können.

Der Erfindung liegt daher die Aufgabe zugrunde, eine Alarmanlage zu schaffen, die einfach zu installieren, störungsunempfindlich sowie preiswert ist.

Diese Aufgabe wird erfindungsgemäß gelöst durch einen Schallerzeuger, eine die Schall-Reflexionscharakteristik des Raums erfassende Einrichtung und eine Auswerteschaltung, die bei bestimmten (vorgebbaren) Änderungen der Schall-Reflexionscharakteristik den Alarm auslöst. Die erfindungsgemäße Alarmanlage reagiert somit auf Änderungen der Schall-Reflexionscharakteristik eines Raumes, so daß sowohl dynamische Vorgänge (z. B. die Bewegung eines Lebewesens) und auch statische Vorgänge (z. B. eine veränderte Stellung eines Möbelstücks) erfaßt werden. In zyklischen Zeitabständen wird die aktuelle Schall-Reflexionscharakteristik des Raumes erfaßt und mit Charakteristik des vorhergehenden Zeitraums verglichen. Stellen sich Veränderungen ein, die ein vorgebbares Maß überschreiten, so erfolgt eine Alarmauslösung. Die erfindungsgemäße Alarmanlage stellt sich selbsttätig auf die Raumverhältnisse ein. Daher ist keine feste Installation erforderlich, die bauseitige Maßnahmen erfordert. Die Alarmanlage kann als portables, kompaktes Gerät ausgebildet werden, das lediglich in den zu überwachenden Raum hineinzustellen ist. Das erfindungsgemäße Prinzip der Überwachung von Änderungen der Schall-Reflexionscharakteristik beruht auf der Laufzeitübervachung einer Vielzahl von Echos, die von dem Raum bzw. der darin vorhandenen Objekte erzeugt werden. Diese "Echoüberwachung" ist im Hinblick auf Fehlmessungen -also Fehlauslösungen- relativ unempfindlich; dennoch lassen sich selbst geringfügigste Änderungen erfassen, so daß eine hohe Sicherheit gewährleistet ist.

Nach einer Weiterbildung der Erfindung ist vorgesehen, daß die Einrichtung ein akustischer Echokompensator ist. Ein derartiger Echokompensator, der auch als Echolöscher bezeichnet wird, nimmt eine Auswertung der Echos vor. Er erfaßt dabei Änderungen der Schall-Reflexionscharakteristik des Raumes. Die Schallantwort des Raumes wird zyklisch mit der des vorhergehenden Zeitraums verglichen, vorzugsweise von ersterer subtrahiert, so daß ein Minimum angestrebt ist. Ergibt die Differenzbildung den Wert "Null" oder nahezu "Null", so ist im Vergleichszeitraum kein "meldepflichtiges" Ereignis eingetreten.

Die Schall-Reflexionscharakteristik des Raumes wird -wie gesagt- durch Auswertung der Reflexionsantwort ermittelt und vorzugsweise durch dem Echokompensator zugeordneten Koeffizienten nachgebildet. Diese Koeffizienten stellen also ein Maß für die jeweils vorliegende Schall-Reflexionscharakteristik dar, so daß eine Veränderung der Koeffizienten auf ein unzulässiges Eindringen in den Raum oder Verändern des Raumes zurückzuführen ist; mithin sind die Koeffizienten zur Alarmauslösung auf Veränderungen zu überwachen. Bevorzugt führen nur Veränderungen bestimmter, vorgebbarer Art und Größe zu einer Alarmauslösung, so daß die Empfindlichkeit der Anlage einstellbar ist und überdies externe Schallquellen (z. B. in der Lautstärke stark schwankender Straßenlärm oder Blitzschlag) nicht zu einem Fehlalarm führen. Es ist auch möglich, daß die Koeffizienten von mehr als zwei Zeiträumen verglichen werden, um die Funktionssicherheit zu erhöhen.

Bevorzugt wird der Schallerzeuger von einem Sequenz-Generator gebildet, der an einen Lautsprecher angeschlossen ist. Der Echokompensator ist zur Erfassung des Schallereignis' mit einem Mikrofon verbunden. Hierdurch wird ein Lautsprecher-Raum-Mikrofon-System (LRM-System) geschaffen. Sämtliche Komponenten lassen sich in einem portablen, kompakten Gerät vereinigen. Die erfindungsgemäße Alarmanlage kann im Ultraschallbereich arbeiten, so daß sie für den Menschen keine Störung darstellt.

Schließlich ist es vorteilhaft, wenn der Schallerzeuger eine Impulsquelle ist und der Echokompensator die vom Raum bestimmte Impulsantwort des Schallereignis' erfaßt.

Alternativ kann auch vorgesehen sein, daß der Schallerzeuger von einem im Überwachungsraum vorhandenem Schallerzeugnis gebildet wird. Dieses kann sich beispielsweise aufgrund von Umweltgeräuschen einstellen. Eine spezielle Impulsquelle, z. B. einen Sequenz-Generator, ist dann nicht erforderlich.

Die Erfindung betrifft ferner die Verwendung eines Echokompensators für eine Alarmanlage, wobei Veränderungen von das Echo eines Schallerzeugers nachbildenden, dem Echokompensator zugeordneten Koeffizienten überwacht werden und bei bestimmten, vorgebbaren Änderungscharakteristiken eine Alarmauslösung bewirken.

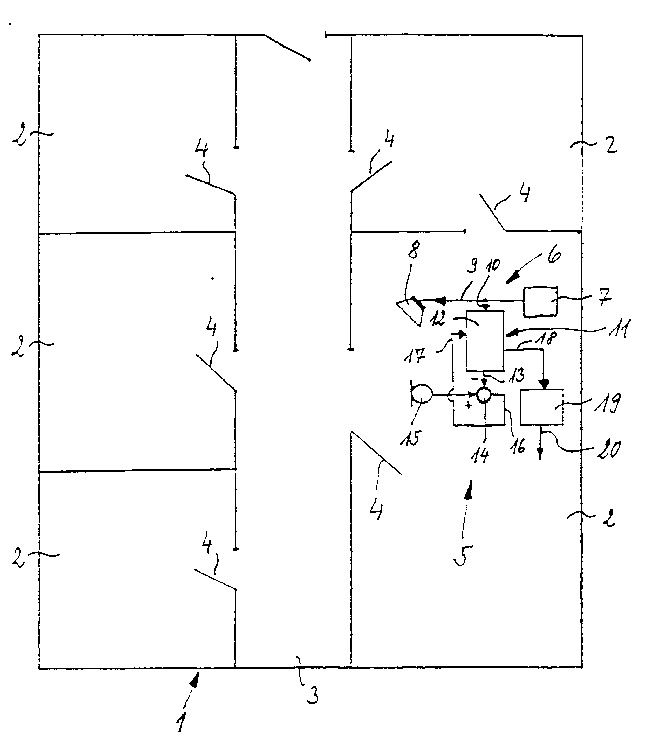

Die Zeichnung veranschaulicht die Erfindung anhand eines Ausführungsbeispiels. Sie zeigt einen Grundriß einer Wohnung mit in einem Raum angeordneter Alarmanlage.

Die Figur gibt in schematischer Darstellung den Grundriß 1 einer Wohnung mit mehreren Räumen 2 wieder, die über einen Flur 3 betreten werden können. Die Räume 2 sind zum Flur 3 durch Türen 4 abgegrenzt und können untereinander ebenfalls über Türen 4 verbunden sein.

In einem der Räume 2 ist eine Alarmanlage 5 installiert. Diese weist einen Schallerzeuger 6 auf, der von einem Sequenz-Generator 7 und einem Lautsprecher 8 gebildet ist. Der Sequenz-Generator 7 steht über eine Leitung 9 mit dem Lautsprecher 8 in Verbindung. Eine Abzweigung 10 der Leitung 9 führt zu einer Einrichtung 11, die als Echokompensator 12 (Echolöscher) ausgebildet ist. Ein Ausgang 13 des Echokompensators 12 führt -mit negativem Vorzeichen- zu einer Summierstelle 14, an die zur Lieferung einer weiteren Eingangsgröße ein Mikrofon 15 angeschlossen ist. Der Ausgang 16 der Summierstelle 14 ist mit einem Eingang 17 des Echokompensators 12 verbunden. Ein Ausgang 18 des Echokompensators 12 führt zu einer Auswerteschaltung 19, die einen Anschluß 20 aufweist.

Die erfindungsgemäße Alarmanlage 5 arbeitet folgendermaßen:
Der Sequenz-Generator 7 erzeugt Impulse, die über die Leitung 9 dem Lautsprecher 8 zugeführt werden, der je Impuls ein entsprechendes Schallereignis in den Raum 2 ausstrahlt. Über den Abzweig 10 wird dem Echokompensator 12 die Abgabe der Impulse gemeldet.

Der von der Alarmanlage 5 überwachte Raum 2 weist eine individuelle Schall-Reflexionscharakteristik auf, die von einer Vielzahl von Faktoren bestimmt wird. Sie ist unter anderem von der Raumgröße, dem Wand-, Decken- und Bodenbelag, der Einrichtung, der Stellung der Türen usw. abhängig. Die Ausstrahlung der Impulssequenz führt dazu, daß das Mikrofon 15 neben dem Direktschall jedes Impulses eine Vielzahl von Echos aufnimmt, die durch die Reflexionen des Schalls an den Begrenzungen bzw. Objekten des Raumes 2 bestimmt sind. Der Raum 2 hat also eine individuelle Impulsantwort. Erfolgt ein unbefugtes Eindringen bzw. Betreten des überwachten Raums 2 und/oder wird eine Veränderung des Raums 2 (z. B. durch öffnen einer Tür 4 bzw. Umstellen eines Möbelstücks) vorgenommen, so verändern sich die Echos aufgrund einer anderen Schall-Reflexionscharakteristik; das heißt, die Impulsantwort hat sich in dem Zeitraum von dem einen auf den anderen Impuls geändert. Das Mikrofon 15 der Alarmanlage 5 empfängt den jedem Impuls zugehörigen Direktschall sowie die Vielzahl der Echos des vom Lautsprecher 8 ausgestrahlten Schallereignis'. Der Echokompensator 12 bildet die sich einstellende Impulsantwort mittels Koeffizienten K nach. Am Ausgang 13 erzeugt der Echokompensator 12 ein der momentanen Impulsantwort repräsentatives Signal, das der Summierstelle 14 zugeführt wird. Entspricht dieses durch den aktuellen Impuls erzeugte Signal dem vom Folgeimpuls hervorgerufenen Mikrofonsignal, so liegt am Ausgang 16 der Summierstelle 14 eine Differenz vom Wert "Null" bzw. "nahezu Null" vor. Die Koeffizienten K bleiben damit im Zeitraum der aufeinander folgenden Impulse unverändert. Ergibt sich an der Summierstelle 14 aufgrund einer veränderten Impulsantwort eine Differenz, die vom Wert "Null" abweicht, so ändert der Echokompensator 12 die Koeffizienten K derart, daß sich am Ausgang 16 wieder der Wert "Null" bzw. "nahezu Null" einstellt. Diese Veränderung der Koeffizienten K wird von der Auswerteschaltung 19 erfaßt. Art und Umfang der Veränderung der Koeffizienten K bestimmen, ob eine Alarmabgabe erfolgt. Die Schwelle für die Alarmabgabe läßt sich somit individuell durch die Auswertekriterien der Auswerteschaltung 19 vorgeben.

Nach einem weiteren, nicht dargestellten Ausführungsbeispiel kann der Sequenz-Generator 7 entfallen. Der Ausgang 16 der Summierstelle 14 wird dann -in Abänderung des in der Figur dargestellten Ausführungsbeipiels- über einen Verstärker direkt mit dem Lautsprecher 8 verbunden. Diese Schaltungsanordnung führt dazu, daß nur Geräusche, die nicht vom Lautsprecher erzeugt werden, sondern im Überwachungsraum vorhanden sind, als Schallerzeuger dienen. Diese Geräusche können beispielsweise Umweltgeräusche (wie z. B. Straßenverkehrsgeräusche) sein. Die Ausblendung der vom Lautsprecher stammenden Geräusche verhindert eine Rückkopplung.

Die Alarmanlage 5 läßt sich als transportables Kompaktgerät herstellen, daß für eine Raum- bzw. Wohnungsüberwachung lediglich im Überwachungsbereich aufgestellt werden muß, mithin also keine Installationsarbeiten oder bautechnische Änderungen erfordert. Daher liegt eine flexible und preiswerte Lösung vor.

## Patentansprüche

1. Alarmanlage zur Erfassung unbefugten Betretens oder Veränderns von Räumen mit einem Schallerzeuger (6), einer die Schall-Reflexionscharakteristik des Raumes (2) erfassenden Einrichtung (11) und einer Auswerteschaltung (19), die bei bestimmten Änderungen der Schall-Reflexionscharakteristik den Alarm auslöst,
**dadurch gekennzeichnet,** daß die Einrichtung (11) ein akustischer Echokompensator (12) ist, daß die Schall-Reflexionscharakteristik des Raumes (2) durch Auswertung der Reflexionsantwort ermittelt und durch dem Echokompensator (12) zugeordneten Koeffizienten (K) nachgebildet wird, daß die Auswerteschaltung (19) die Koeffizienten (K) auf Veränderungen überwacht und die Auswerteschaltung (19) beim Auftreten bestimmter Änderungen der Koeffizienten (K) den Alarm aus löst.

2. Alarmanlage nach Anspruch 1, dadurch gekennzeichnet, daß der Schallerzeuger (6) von einem Sequenz-Generator (7) gebildet wird, der an einen Lautsprecher (8) angeschlossen ist.

3. Alarmanlage nach einem der vorhergehenden Ansprüche, dadurch gekennzeichnet, daß der Echokompensator (12) zur Erfassung des Schallereignisses an ein Mikrofon (15) angeschlossen ist.

4. Alarmanlage nach einem der vorhergehenden Ansprüche, dadurch gekennzeichnet, daß der Schallerzeuger (6) eine Impulsquelle ist, und daß der Echokompensator (12) die vom Raum (2) bestimmte Impulsantwort des Schallereignisses erfaßt.

5. Alarmanlage nach einem der vorhergehenden Ansprüche, dadurch gekennzeichnet, daß der Schallerzeuger (6) ein im Überwachungsraum vorhandenes Schallerzeugnis ist.

## Claims

1. An alarm system for detecting unauthorized entry into or changes in rooms, comprising an acoustic generator (6), a device (11) determining the sound reflection characteristic of the room (2), and an evaluating circuit (19) which causes an alarm on the occurrence of specific changes in the sound reflection characteristic,
**characterized in** that the device (11) is an acoustic echo canceller (12), that the sound reflection characteristic of the room (2) is determined by evaluating the reflected sound and simulated by coefficients (k) assigned to the echo canceller (12), that the evaluating circuit (19) monitors the coefficients (K) for changes, and that the evaluating circuit (19) causes the alarm on the occurrence of specific changes of the coefficient (K).

2. An alarm system as claimed in claim 1, characterized in that the acoustic generator (6) is constituted by a sequence generator (7) connected to a loudspeaker (8).

3. An alarm system as claimed in claim 2, characterized in that the echo canceller (12) is connected to a microphone (15) for sensing the sound event.

4. An alarm system as claimed in any one of the preceding claims, characterized in that the acoustic generator (6) is a pulse source, and that the echo canceller (12) senses the pulse response of the sound event, said pulse response being determined by the room (2).

5. An alarm system as claimed in any one of the preceding claims, characterized in that the acoustic generator (6) is a sound product present in the room to be monitored.

## Revendications

1. Installation d'alarme pour saisir un accès dans des espaces, ou leur modification, non autorisés, comportant un émetteur sonore (6), un dispositif (11) qui saisit la caractéristique de réflexion sonore de l'espace (2) et un circuit de traitement (19) qui déclenche l'alarme lors de modifications déterminées de la caractéristique de réflexion sonore,
installation caractérisée par le fait que le dispositif (11) est un compensateur d'écho sonore (12), que la caractéristique de réflexion sonore de l'espace (2) est établie par traitement de la réponse consistant en la réflexion sonore et qu'elle est simulée par les coefficients (K) affectés au compensateur d'écho (12), que le circuit de traitement (19) surveille si les coefficients (K) se modifient et qu'en cas d'apparition de modifications déterminées des coefficients (K), le circuit de traitement (19) déclenche l'alarme.

2. Installation d'alarme selon la revendication 1, caractérisée par le fait que l'émetteur sonore (6) est formé par un générateur de séquences (7) qui est relié à un haut-parleur (8).

3. Installation d'alarme selon l'une des revendications précédentes, caractérisée par le fait que, pour saisir l'évènement sonore, le compensateur d'écho (12) est relié à un microphone (15).

4. Installation d'alarme selon l'une des revendications précédentes, caractérisée par le fait que l'émetteur sonore (6) est une source d'impulsions et que le compensateur d'écho (12) saisit la réponse impulsionnelle, déterminée par l'espace (2), de l'évènement sonore.

5. Installation d'alarme selon l'une des revendications précédentes, caractérisée par le fait que l'émetteur sonore (6) est un évènement sonore existant dans l'espace à surveiller.
